# EUROPÄISCHE PATENTSCHRIFT

(11) **EP 0 820 900 B1**
(45) Veröffentlichungstag und Bekanntmachung des Hinweises auf die Patenterteilung: **12.12.2001**
(21) Anmeldenummer: 96510002.7
(22) Anmeldetag: 10.10.1996
(51) Int. Cl.: B60Q 1/26, B60R 1/12

(54) **Äussere Fassung mit Multirichtungssignal für Fahrzeuge mit zwei, vier oder mehreren Rädern**
Outer/outside frame with multi-purpose indicator for vehicles of 2,4 or more wheels
Cadre extérieur à signal multidirectionnel pour véhicules de 2,4 roues ou plus

(30) Priorität: 24.07.1996 ES 9601695
(43) Veröffentlichungstag der Anmeldung: 28.01.1998
(73) Patentinhaber: Barros Garcia, Alex Rodrigo, 08003 Barcelona (ES)
(72) Erfinder: Barros Garcia, Alex Rodrigo, 08003 Barcelona (ES)

(56) Entgegenhaltungen:
- EP-A- 0 738 627
- WO-A-89/01425
- DE-U- 29 607 691
- GB-A- 2 266 870

## Beschreibung

Die vorliegende Erfindung besteht in seinem Hauptzweck aus einer tragenden Fassung mit integriertem, optischen Multirichtungs-anzeiger, welcher von einem Punkt aus die verschiedenen Verkehrsmanöver beschreibt, und sich den ausladensten Stellen der seitlichen Karosserie, die zugleich die Extrempunkte der Breite darstellen, anfügt . Diese rechts und linksliegenden Punkte sind übereinstimmend, sowohl bei der Vorder-, als auch Rückansicht von Fahrzeugen mit zwei, vier oder mehreren Rädern.

Wie wir wissen , besitzt jede dem Verkehr zugelassene Fahrzeugart folgende Signalleuchten, um die herkömmlichen Verkehrs -manöver anzuzeigen : Brems-/Stoplicht, Blinker, Rückfahrschein- werfer, Nebelschlussleuchte; im allgemeinen bilden sie einen gemeinsamen Block und dienen in Gefahrensituationen zusätzlich als Warnblickanlage.

Diese Signalleuchten befinden sich ihrer Funktion entsprechend fast immer an den Eckpunkten der Karosserie, gleichweit von der Mittelachse des Fahrzeuges entfernt, vor bzw. hinter den Rädern.

Da sie ausserdem unter der Augenhöhe des Fahrzeugführers liegen, muss dieser somit die Aufmerksamkeit einen Moment von dem normalen Fahrtblick abwenden, um die Absichten der anderen Ver- kehrsteilnehmer zu erkennen. Eine weitere Schwierigkeit besteht in der Beeinträchtigung der Funktion von Signalleuchten bei Regen und Nebel oder durch Staubwolken auf Geländepisten.

Wenn in einer Fahrspur zwei, drei oder mehrere Fahrzeuge aufeinanderfolgen, eines das andere verdeckt, werden die Signale der Leuchten unterbrochen. Man weiss nicht, was der erste der Reihe machen wird, denn nur die Front- oder Hecksilhouette des nächsten Fahrzeuges ist sichtbar.

Die zuletzt geschilderte Situation führt zu dem sogenannten "Ziehharmonikaeffekt", der den Verkehrsfluss verzögert und beim Bremsen die Reaktionszeit des Letzten der Kette reduziert oder eliminiert - Auslöser fast aller (Massen) Auffahrunfälle.
Zuzüglich der anderen Schwierigkeiten und infolge der fehlenden Informationen an den Seitenflanken, kommt es bei Spur- und Richtungswechseln zu schweren Unfällen, vor allem mit Motorrad-fahrern, die zwischen den Fahrbahnen fahren.

Eine vorteilhafte Lösung für solche Probleme ist die Fassung mit Multirichtungssignal, auf die wir uns beziehen, welche als Neuheit ein multirichtungsweisendes Signal beinhaltet, das ermöglicht, von einem Punkt aus, Signale gleichzeitig nach vorne, nach hinten und zur Seite hin auszusenden. Ausserdem werden die geforderten Minimalwinkel für die herkömmlichen Leuchten, die es ergänzt, weitgehend abgedeckt und sogar übertroffen. Als grundlegend wird der Effekt des rückwärtig strahlenden Lichtes betrachtet, da es die Signalleuchten von der Seite aus nach hinten hin verstärkt.

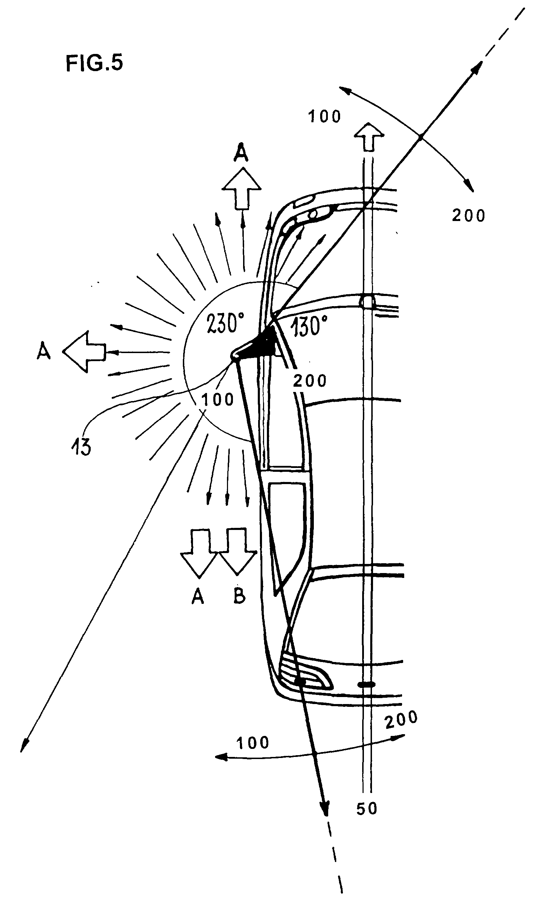

Ausgehend von der Längs-Mittelachse befindet sich die Fassung mit Multirichtungssignal, aufgesetzt auf die Aussenspiegel, an den Extremstellen der seitlichen Karosserie. Die Neuheit besteht darin, dass sie freiliegend von den Seiten, weder von der eigenen Karosserie, noch von anderen Fahrzeugen, die auf derselben Spur fahren, verdeckt wird. Angepasst an die hervorstehenden Enden der Systemeinheiten zur rückwärtigen Sicht, bestehend aus irgendeinem optischen System (Videokamera oder Spiegel), und somit über die Breite der Front- bzw. Hecksilhouette des Fahrzeugs herausragend,hat dies ausserdem den Vorteil, dass die Signale ins Freie projeziert werden.(Siehe Figur5).

Andere Vorschläge konnten die Schwierigkeiten nur unzureichend oder teilweise lösen, stellten unausführbare Anderungen dar. Sie berücksichtigten weder eine multirichtungsweisende Funktion, noch hatten sie Ähnlichkeiten mit der neuen, hier präsentierten Fassung mit Multirichtungssignal.

Wie wir in den Dokumenten GB-A-2 266 870, welches dem gattungsbildenden Oberbegriff des Anspruchs 1 entspricht, WO-A-89 01425 und US-A-4661800 sehen können beeinträchtigt das Licht, das von dem Spiegel produziert wird das Auge des Fahrers auf gefährliche Weise. Darüberhinaus zeigen Sie weder eine Lösung für das Austauschen der Glühbirne, noch für den Austausch des Spiegels im Ganzen auf.

Übereinstimmend mit dem hier Analisierten können wir den Rückspiegel, mit Blinker im Spiegelglas nennen, entsprechend dem inzwischen verjährten und allgemein bekannten, argentinischen Patent Nr. 177959.

Das genannte System bestand aus einem Spiegel, der in einem Teil halbmatt und lichtdurchlässig ist, mit Blinklicht und reflektierenden Schichten, die sich aus einer Reihe kleiner Lamellen zusammensetzen, die in einem bestimmten Winkel bezüglich der Oberfläche des Spiegels stehen und somit durch den halbmatten Teil des Spiegelglases als Streuungsmedium des Lichts nach aussen , und durch die Glühbirne als lichtbündelndes Medium wirken. Der lichtdurchlässige Teil des Spiegelglases wird durch das Blinklicht erleuchtet, welches aber nur eine Richtung beschreibt, und durch die Tatsache, dass Spiegel und Licht eine Einheit sind, führt das Aufblinken unweigerlich dazu, dass der Fahrer geblendet wird. Selbst durch holografische oder reflektierende Systeme, welche die Strahlen ausrichten, bleibt die Beleuchtung des Spiegelglases an sich gefährlich.

Andere Teillösungen, bei denen sich die Blinker auf der Rückseite der Aussenspiegel befanden, berücksichtigten bei der Aussendung des Lichtes nur die Richtung nach vorne. Da sich alle Frontleuchten vor den Rädern befinden müssen, entsprachen sie somit nicht den vorgeschriebenen Verkehrsnormen. Ausserdem waren sie meist eingefasst und nicht austauschbar, die Schwierigkeiten beim Einbau oder Austausch führten zu beträchtlichen Kosten, aber nur zu demselben Ergebnis, das man vorher schon hatte.

Die Fassung mit Multirichtungssignal hingegen, besteht in der Erfindung einer unabhängigen Einheit, welche die Funktion der Systemeinheit zur rückwärtigen Sicht nicht einschränkt, sondern sich mit ihr zu einer einzigen Einheit zusammenschliesst und folglich mit dieser zwei verschiedene Funktionen erfüllt: eine besteht darin die rückwärtige Sicht einzufangen, die andere darin Leuchtsignale
in mehrere Richtungen auszusenden. Seine originale Ausführung sieht ein System vor, das zwei Hohlkörper vollkommen zu einem einzigen Körper zusammenfügt, zwischen denen sich eine Trennwand erhebt, die eine bestimmte Schattenzone auf die Position des Fahrers wirft.

Die neue Bedeutung, welche die Fassung mit Multirichtungssignal den Seitenflanken verleiht, führt bei allen Verkehrsmanövern zu grösserer Sicherheit, da das eingebaute Multirichtungssignal die vorhandenen Signalleuchten an Front und Heck ergänzt und somit die Wirksamkeit des Leuchtsystems nach allen Seiten hin erhöht und im Folgenden sicherer macht.

Die Neuheit, dieses Signal auf einfache Weise an vorhandene Rückspiegelsysteme anzubauen, und die Möglichkeit sie bei neuen Fahrzeugen durch integriertes Design als Serienausstattung einzubauen, begünstigt eine vereinfachte Durchführung und niedrige Kosten.

Die Konstruktionsmerkmale zeigen den wirklichen erfinderischen Charakter. Der eigentliche Körper ist hohl und definiert sich durch eine konkave Form, die sich exakt an den äusseren Teil des Rückspiegels aufsetzen lässt und durch eine konvexe Aussenseite, bevorzugterweise aus widerstandsfähigem, lichtdurchlässigem Material in den vorgeschriebenen Farben für die jeweiligen optischen Leuchtsignale und Reflektoren (Katzenaugen, holografische Reflektoren). In seinem Inneren befinden sich die Glühbirnen oder andere Lichtsyteme ( LED, Laser, Neon oder änliche), und ihre entsprechenden Reflektorflächen, die jedem Signal seinen Lichtwinkel zuweisen. Neu ist auch ein schwaches Kontrollicht, welches durch Löcher im Inneren des Rückspiegels, lichtdurchlässige, halbmatte Stellen des Spiegelglases erleuchtet. Bezüglich der elektrischen Versorgung können die Signale durch Funktionsschalter und Befehlstasten vom Hauptstromkreis des Fahrzeuges, oder je nach Fahrzeugtyp, auch von anderen gebräuchlichen unabhängigen Energiequellen versorgt werden.

Für besseres Verständnis folgen genaue Erklärungen der beiliegenden Zeichnungen, gemäss einem Prototyp der vorliegenden Erfindung.
- Die Figuren 1 und 2 entsprechen, der Vorder- bzw. Rückansicht der Fassung mit Multirichtungssignal.
   Figur 3 ist ein Querschnitt durch die Achse A-A der Figuren 1 und 2, welcher die innere Beschaffenheit des Prototyps zeigt.
- Figur 4 zeigt die perspektivische Ansicht des Rückspiegels mit der aufgesetzten, ineinander übergehenden Fassung, der eine einzige, integrierte Einheit darstellt.
- Die Figur 5 zeigt in einer Draufsicht, entlang der Längsachse des Fahrzeuges (50), das Wirkungsfeld, welches das neue Multirichtungssignal beschreibt.

Wie aus den Zeichnungen ersichtlich, besteht die Fassung mit integriertem Multirichtungssignal aus einem Körper (1), der sich im wesentlichen durch zwei Formen kennzeichnet: der konkaven , sich anfügenden Form (2) und der konvexen, äusseren Form (3).

Die sich anfügende Form beinhaltet als wirksame Befestigung zwei selbstklebende Flächen (8), zwei Fixierpunkte für selbstziehende Schrauben (9) und ausserdem den einfassenden Rahmen (7), welche in ihrem Zusammenwiken ein vollkommenes, dauerhaftes und austauschbares Halterungssystem auf dreieckiger Basis bilden, das Spielfreiheit in allen drei Bewegungsachsen, sowie jegliche Vibration ausschliesst. Damit besteht es leicht den Anforderungen des für Aussenspiegel üblichen Tests, den Stoss eines 60 kg schweren Pendels. Diese Befestigung sorgt dafür, dass sich die Fassung vollkommen an die hervorstehenden Enden der Systemeinheiten zur rückwärtigen Sicht anfügt. Unter ständiger Berücksichtigung der funktionalen Eigenschaften bei unterschiedlichen Ausführungen, kann die Fassung verschiedene Grössen annehmen, oder eine einzige Einheit bilden, welche das optische System zur rückwärtigen Sicht (Videokamera oder Spiegel) integriert, an einer Seite an der Karosserie befestigt ist und an der anderen freisteht.

Die äussere, konvexe Form besteht bevorzugterweise aus widerstandsfähigem, lichtdurchlässigem Material, welches beim Erleuchten das entsprechende Signal in den vorgeschriebenen Farben erzeugt (rot für Brems-/Stoplicht (4), gelb für Blinker, auf der vorderen, hinteren und seitlichen Fläche (5)) und aus reflektierenden Flächen (5bis), wie selbstklebenden Folien, welche unter Umständen mit einem grafischen Zeichen und/oder einem Logo versehen sein können, die zum Verdecken der Schrauben (9), die einen Austausch ermöglichen, dienen. Die inneren Fenster (4) und (5) senden durch lichtdurchlässige, halbmatte Stellen im Spiegelglas ein schwaches Kontrollicht aus.

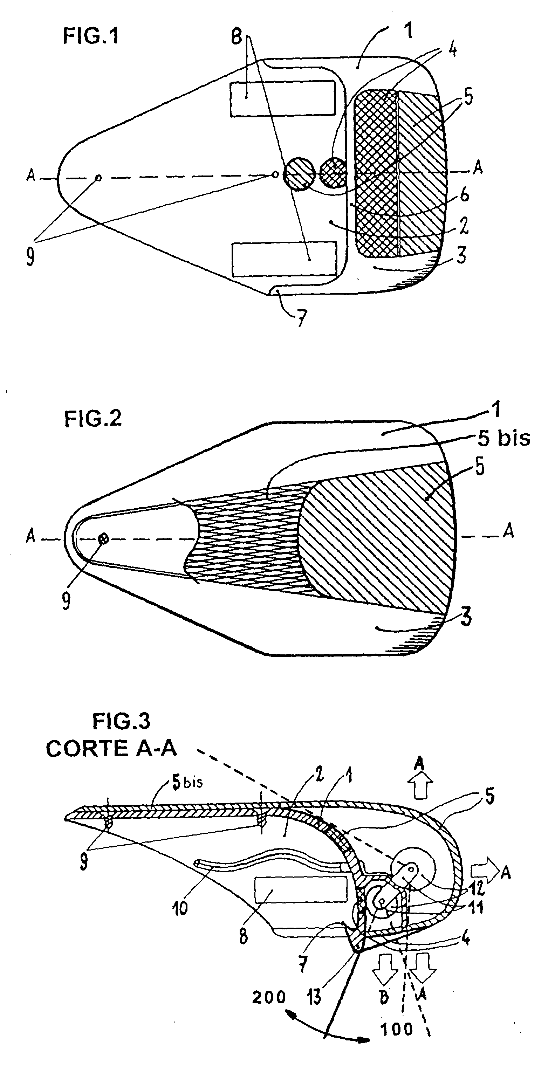

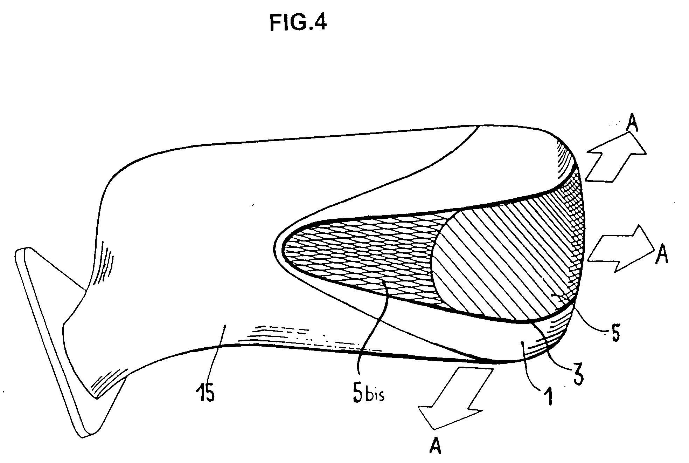

Es ist hervorzuheben, das der Wirkungsbereich der Signale ( verdeutlicht durch die Pfeile A und B in den Figuren 3 und 4), die von der Oberfläche (4), (5) und (5bis) ausgestrahlt werden, im Ganzen gesehen mehr als 220 Grad erfasst. Das Licht fällt hierbei nie in die Augen des Fahrers .Die Trennwand (13) ist so konzipiert, dass sie das Lichtfeld einschränkt (100) und einen Schattenkegel für den Fahrer wirft (200).

Die Trennwand (13) hat eine Oberfläche (6) die etwas weiter heraustritt als das Glas des Signals (4) (siehe Figures 1 und 3).

Im innenliegenden Hohlraum befinden sich die, je nach Modell empfohlenen, Glühbirnen (12), mit ihrer entsprechenden Fassung (11), die durch das Kabel (10) mit dem Stromkreis verbunden ist.

Bei einfachen Fahrzeugen können sie auch durch Batterien oder jede andere, unabhängige Energiequelle versorgt werden.

Mit der Anwendung dieser Neuheit bilden die Systemeinheiten zur rückwärtigen Sicht ein Mehrzwecksystem, welches zwei Funktionen dient: zum einen der Sicht nach hinten, zum anderen ergänzende Signale auszusenden, die denen, im vorderen und hinteren Bereich eines Fahrzeuges angebrachten, ähnlich sind, wie zum Beispiel Bremslicht, Blinklicht, Warnblinklicht, Nebelschlussleuchte und Rückfahrleuchte .

Die an den seitlichen Extremen der Karosserie befestigte Fassung mit Multirichtungssignal ragt über die Breite des Fahrzeuges hinaus, und hat somit beim Anzeigen der Verkehrsmanöver, nicht nur des nächsten vorausfahrenden Fahrzeuges, sondern auch der 2, 3 oder mehreren anderen Fahrzeuge die auf der selben Spur fahren, grössere Wirkung. Von besonderem Wert ist dies für Motorradfahrer, die zwischen den Spuren fahren.

Ein Vorteil besteht auch darin, dass man die Information früher erhält und somit eher reagieren kann als die ganze Fahrzeugkolonne, was wiederum den Ziehharmonikaeffekt vermindert und Auffahrunfälle verringert. Da die neue Fassung mit Multirichtungssignal im direkten Blickfeld des Fahrers liegt, muss die Aufmerksamkeit nicht abgewendet werden, um die Absichten der anderen Verkehrsteilnehmer zu erkennen. Dies wirkt sich vorteilhaft in einem Zeitgewinn aus; das Fahren ist sicherer und ermüdungsfreier.

Die Erfindung, welche die aktuellen europäischen Zulassungsnormen für Beleuchtungssysteme erfüllt, ergänzt die vorhandenen Signalleuchte, ist kostengünstig und einfach zu installieren.

Die Summe all ihrer Vorteile führt zu erhöhter Sicherheit und besserem Verkehrsfluss.

Massgeblich für die Erfindung ist der gesamte Offenbarungsgehalt der Anmeldeunterlagen in Beschreibung und Zeichnung.

## Patentansprüche

1. Seitliche äussere Fassung mit optischem, multirichtungsweisendem Signal für Fahrzeuge mit zwei, vier oder mehreren Rädern, welche sich seitlich an die hervorstehenden Enden der Systemeinheiten zur rückwärtigen Sicht, wie Videokamera oder Spiegelsysteme, anfügt, und somit die Extrempunkte des Fahrzeugs kennzeichnet; bestehend aus einem Körper mit einem Hohlraum, indem sich die elektrischen Glühbirnen oder andere lichterzeugende oder reflektierende Systeme befinden, welche über die entsprechenden Funktionsschalter und Befehlstasten für die jeweiligen Verkehrsmanöver, mit dem Hauptstromkreis, oder anderen gebräuchlichen, unabhängigen Energiequellen verbunden sind, und das Licht in verschiedenen Winkeln ausstrahlt , **dadurch gekennzeichnet, daß** das Licht entweder durch die äusseren Einfassungen aus lichtdurchlässigem und in den vorgeschriebenen Farben für die genannten Verkehrsmanöver bestehendem Material , oder durch einen lichtdurchlässigen, halbmatten Teil des Spiegelglases ausgestrahlt wird wobei dieses Licht mit Hilfe einer hervorstehenden Trennwand (13) in zwei Zonen für den Fahrer eingeteilt wird, in eine Zone des Signallichts (100) und in eine Schattenzone(200) .

2. Seitliche äussere Fassung mit optischem, multirichtungsweisendem Signal für Fahrzeuge gemäss Anspruch 1, welche sich vollkommen an die hervorstehenden Enden der Systemeinheiten zur rückwärtigen Sicht anfügt, mit einem Befestigungssystem, gebildet aus einem einfassenden Rahmen (7), zwei selbstklebenden Flächen (8) und zwei selbstziehende Schrauben (9), die von einer Fläche (5bis) verdeckt sind , und die ein Austauschen des gesamten Moduls durch ein ähnliches ermöglichen, welches Vibrationen, Bewegungen und laute Geräusche ausschliesst und sich vollkommen an das Originaldesign des seitlichen Rückspiegels anpasst und sich aufgrund seiner originalen Form fest mit der Systemeinheit zur rückwärtigen Sicht verbindet und somit einen einzigen Körper mit zwei Funktionen bildet, der an der Karosserie befestigt ist: eine Funktion ist die Sicht nach hinten, die andere die seitliche Aussendung von Leuchtsignalen ins Freie.

3. Seitliche äussere Fassung mit optischem, multirichtungsweisendem Signal für Fahrzeuge gemäss Anspruch 1, welches von einem einzigen, seitlich gelegenem Punkt, dem Extrempunkt der Breite des Fahrzeugs, Signale gleichzeitig in mehrere Richtungen, nach vorne, zur Seite und nach hinten je nach aktivierter Funktion ausstrahlt ohne dabei von der Karosserie verdeckt zu werden.

## Claims

1. Lateral, exterior frame with trend-setting optical multidirectional signal for vehicles with two, four, or more wheels which is attached laterally to the projecting ends of the system units for a rear view like that of a video camera or mirror system, thus marking the extreme points of the vehicle; consisting of a body cavity containing electric light bulbs or any other light-generating or - reflecting system connected to the corresponding function switch and command keys which operate the respective traffic maneuvers by use of a main electric circuit or any other independent energy source. The light radiates from various angles thereby distinguishing whether it radiates through an exterior enclosure made of a light permeable material in the prescribed colors for the already mentioned traffic maneuvers, or through a light permeable half matte piece of mirror glass by which the light is separated with the help of a projecting dividing wall (13) into two zones for the driver, a signal light zone (100) and a shadow zone (200).

2. Lateral, exterior frame with trend-setting optical multidirectional signal for vehicles according to claim 1, which attaches perfectly to the projecting ends of the rear-view system units by a fastening system consisting of a bordered framework (7), two self-sticking surfaces (8), and two self-tapping screws (9) covered by a surface (5bis), which allows for the entire module to be exchanged for a similar one that excludes vibrations, movements and loud noises, and adapts itself completely to the original design of the lateral rear-view mirror, which due to its original shape joins with the rear-view mirror to create a single body that is attached to the vehicle body and has two functions: one function being rear-view vision, and the other being the lateral emission of light signals.

3. Lateral, exterior frame with trend-setting optical multidirectional signal for vehicles according to claim 1, which from a single lateral located point, the extreme point of the width of the vehicle, emits signals simultaneously in various directions, to the front, to the side, and to the rear, depending upon the activated function, and without being covered by the vehicle body.

## Revendications

1. Encadrement du boîtier latéral extérieur avec signal optique multidirectionel pour les vehicules de 2, 3, 4 roues au plus, **caractérisé par** son emplacement; partie la plus saillante du véhicule situé syr la partie extérieure des rétroviseurs , que ces derniers soient un système de retrovision par miroir, prismes au ancore caméra; marquant les limites de la largeur du véhicule qui présente un corps avec au mains una cavité interne, où sont situées les ampoules électriques au tout autre système lumineux direct ou réflecteur, connecté au circuit électrique general ou toute autre source d'énergia indépendante traditionnelle et qui d'accionè par les commandes des signaux habituels de circulation ou de manoeuvre qu'il complémente, ainsi que le signal d'ouverture de portes. Emmettant la lumière suivant différents angles et plans; d'après au moins une de ces fonctions, au travers de plaques externes translucides avec les couleurs et/ou les combinaisons optiques de sorties de lumière permettant de répondre â la règlementation pour ces maneouvres et/ou â travers d'une zone semi-opaque intégrée dans le miroir comme lumière temoin. Ainsi, le signal n'est pas intercepte par la carrosserie. Et presente une cloison calibrée interieure au exteriere (13) avec une saillie exterieure qui sépare la zona du champs de vision ou conducteur, (200) , de la zone d'émission des signaux lumineux et réfléchissants, (100) généré par un module.

2. L'encadrement du bôitier latéral externe avec signal optique multidirectionnel pour véhicules correspondant a la revendication 1, **caracterisé par** la fixation au berd le plus saillent du retroviseurs par l'intermediarie d'un systeme de fixation mecanique de clips ou de rebord de matière adaptable, et/ou de surfaces molles autoadhesives (8), et/au de vis à pression (9) qui permettent ensemble la substitution par un outre système de préférence ou par un autre similare. Ce système stable de fixation , qui élimine les mouvements, les vibrations et les bruits, permet de compoder un ensemble embotte qui suit depuis l'exterieur la ligne de design d'origine parfaitement integré dans le boîter du rétroviseur d'un ensemble ausi suviant la ligne de design externe d'origine fixé d'un côté à la carrosserie, et de l'autre restant libre, avec plusieures fonctions en un seul bloc; une de rétrovision et dé l'autre de signaux et/au de fonctions lumineuses qui se projette dans un vide latéral.

3. Encadrement du boîtier latéral extérieur avec signal optique multidirectionnel pour véhicules selon la revendication 1, **caractérisé par** l'émission de signaux depuis la surface latérale qui marque les limites de la largeure du vehícule de manières multidiréctionnelle frontale et à l'arrière, des côtes, de façon simultanées au non, selon la fonction sélectionnée , éclairant les plans latéraux.
